**Europäisches Patentamt**

**European Patent Office**

**Office européen des brevets**

(19)

(11) Veröffentlichungsnummer : **0 331 946 B1**

(12)

# EUROPÄISCHE PATENTSCHRIFT

(45) Veröffentlichungstag der Patentschrift :
**30.09.92 Patentblatt 92/40**

(51) Int. Cl.$^5$ : **C03B 37/06, D01D 5/08**

(21) Anmeldenummer : **89102774.0**

(22) Anmeldetag : **17.02.89**

(54) **Einrichtung zur Erzeugung von Fasern, insbesondere Mineralfasern, aus einer Schmelze.**

(30) Priorität : **07.03.88 DE 3807420**

(43) Veröffentlichungstag der Anmeldung :
**13.09.89 Patentblatt 89/37**

(45) Bekanntmachung des Hinweises auf die
Patenterteilung :
**30.09.92 Patentblatt 92/40**

(84) Benannte Vertragsstaaten :
**AT BE CH DE ES FR GB IT LI LU NL SE**

(56) Entgegenhaltungen :
**AT-B- 244 011
US-A- 3 283 039**

(73) Patentinhaber : **Grünzweig + Hartmann
Aktiengesellschaft
Bürgermeister-Grünzweig-Strasse 1-47
W-6700 Ludwigshafen am Rhein (DE)**

(72) Erfinder : **Hirschmann, Klemens, Dr.-Ing.
Heddesheimerstr. 27
W-6804 Ilvesheim (DE)**
Erfinder : **Ungerer, Heinz-Jürgen, Dipl.-Ing.
Bensheimerstr. 39
W-6806 Viernheim (DE)**
Erfinder : **Mellum, Joachim, Ing.
Mozartstr. 22
W-6905 Schriesheim (DE)**

(74) Vertreter : **KUHNEN, WACKER & PARTNER
Alois-Steinecker-Strasse 22 Postfach 1553
W-8050 Freising (DE)**

**EP 0 331 946 B1**

## Beschreibung

Die Erfindung betrifft eine Einrichtung zur Erzeugung von Fasern, insbesondere Mineralfasern, aus einer Schmelze nach dem Oberbegriff des Anspruchs 1.

Beim Düsenblasverfahren werden aus in der Regel einer Reihe von öffnungen eines Schmelzezerteilers austretende Primärfäden dem Ziehspalt einer Blasdüse zugeführt und in einer ebenfalls in den Ziehspalt eintretenden Gasströmung beschleunigt und so vorgezogen. Im Ziehspalt herrscht ein Geschwindigkeitsprofil der Strömung mit ausgeprägter Randbetonung, wobei die randseitigen Hochgeschwindigkeitsströmungen in der Regel durch randseitig eingedüste Blasströme erzeugt werden, welche auch die für den Ausziehvorgang benötigte Energie in die Einrichtung einbringen. Infolge der randseitigen Geschwindigkeitsspitzen und damit Unterdruckzonen gerät der Primärfaden durch seitliche Auslenkung in Schwingung und pendelt in schneller Folge zwischen den beiden randseitigen Hochgeschwindigkeitszonen hin und her. Dabei geraten immer wieder Fadenbestandteile unter die Einwirkung der randseitigen Hochgeschwindigkeitsströme und werden von diesen mitgerissen, während dazwischen liegenden Fadenbestandteile den Spalt zwischen den randseitigen Hochgeschwindigkeitszonen überbrücken. Auf diese Weise kommt es zu peitschenknallartigen Effekten, in denen die Fadenbestandteile unter der Einwirkung unterschiedlicher Strömungsgeschwindigkeiten Zugkräften ausgesetzt sind und zu dünnen Fäden ausgezogen werden.

Hinter dem Ausgang der Blasdüse muß die Gas-Faden-Dispersion verzögert werden, und der statische Druck der Gasströmung etwa auf Umgebungsdruck angehoben werden, um die durch Abkühlung verfestigten Fasern schließlich zur Bildung eines Vlieses ablegen zu können. Zur Verzögerung kann ein Unterschalldiffusor benutzt werden. Dabei ist darauf zu achten, daß die Strömung im Unterschalldiffusor keine großräumigen Verwirbelungen oder sonstige Querströmungen aufweist, welche die Fäden bzw. Fasern aufeinander zu und auf die Strömungsberandung hin bewegen; denn gegenseitige Berührungen der noch nicht verfestigten Fäden wie auch Wandberührungen führen zur Bildung unverzogener Materialteile (Perlen), welche zwar im fertigen Produkt zur Rohdichte beitragen, nicht aber die Funktion von Fasern übernehmen können. Geraten noch nicht ausreichend verfestigte Fadenbestandteile in gegenseitige Berührung, so neigt der unter Zugspannung stehende Faden an der Berührungsstelle zum Reißen, wodurch die dort herrschende Zugspannung aufgehoben wird und das Fadenende die Tendenz hat, in Kugelform zurückzuspringen; dies deshalb, weil die Oberflächenspannung solcher, nach dem Düsenblasverfahren zu verarbeitenden Schmelzen um ein Mehrfaches höher als diejenige von Wasser liegt und ohne äußere Kräfte stets die Tendenz zur Erzeugung einer Kugelform mit minimaler Oberfläche pro Volumen ergibt. Gelangt ein unverfestigter Fadenbestandteil in Wandberührung, so wird er abrupt abgebremst, reißt ebenfalls ab und nimmt kugelige Form an.

Zur Vermeidung solcher Querströmungen muß eine Ablösung der Strömung von der Strömungsberandung des Unterschalldiffusors sicher vermieden werden. Da die Strömungsgeschwindigkeit und somit auch die Reynoldszahl sehr hoch ist, setzt eine sicher ablösungsfreie Verzögerung der Strömung im Unterschalldiffusor einen sehr geringen öffnungswinkel von allenfalls ganz wenigen Grad voraus.

Durch die verlustarme Druckumsetzung in einem solchen schlanken Unterschalldiffusor ergibt sich ein guter Wirkungsgrad und damit ein geringer Energieverbrauch. Weiter wird die Bildung feiner, stark verzogener Fasern dadurch begünstigt, daß das Geschwindigkeitsprofil aus der Blasdüse qualitativ über eine lange Wegstrecke im Unterschalldiffusor aufrechterhalten wird und die seitlichen Unterdruckzonen benachbarte Fadenbestandteile ansaugen und einer Relativbeschleunigung unterwerfen, und so eine zusätzliche Ausziehwirkung bis zur Verfestigung ergeben.

Die AT-A 244 011 der vorliegenden Anmelderin beschreibt eine Vorrichtung zur Herstellung von Fasern, wobei zwei Blasstufen zur Anwendung kommen. Dabei wirkt die erste Blasstufe vertikal, während in der zweiten Stufe eine Bewegungsrichtungsänderung, d. h. eine Ablenkung der Faser-Luft-Dispersion hervorgerufen wird. In den verschiedenen Ausführungen kann dabei die erste Blasstufe mehrere Blasdüsen beinhalten, die aus nahezu baugleichen Elementen bestehen.

Die US-A-3 283 039 lehrt eine weitere Vorrichtung zur Herstellung von Fasern nach dem Düsenblasverfahren, die eine Blasdüse und einen nachgeschalteten Diffusor beinhaltet. Der verwendete Diffusor weist eine parabelförmige Querschnittserweiterung für den Strömungsweg der Faser-Luft-Dispersion auf, damit keine Strömungsablösung erfolgen kann.

Die damit einhergehende Querbewegung der Fadenbestandteile in Richtung auf die Strömungsberandung hin erhöht jedoch die Wahrscheinlichkeit einer Wandberührung in Anbetracht des geringen Öffnungswinkels, so daß auch erhöhte Perlenbildung wegen Wandberührungen auftritt. Weiterhin werden die Fäden über eine lange Wegstrecke in enger gegenseitiger Nachbarschaft geführt, so daß schon geringe Relativbewegungen zu gegenseitigen Berührungen und damit ebenfalls zur Perlenbildung führen können. Wandberührungen und gegenseitige Berührungen der bereits verfestigen Fasern sind ebenfalls wahrscheinlich und führen zu einer Verminderung der mittleren Faserlänge durch Bruch von Fasern. Daher ist es schwierig, mit dem

2

Düsenblasverfahren feine Fasern mit großer mittlerer Faserlänge und einem geringen Perlenanteil zu erzeugen.

Demgegenüber liegt der Erfindung die Aufgabe zugrunde, eine Einrichtung der im Oberbegriff des Anspruchs 1 genannten Gattung zu schaffen, mit der Fasern großer mittlerer Faserlänge und guter Feinheit perlenarm erzeugt werden können.

Die Lösung dieser Aufgabe ergibt sich durch die kennzeichnenden Merkmale des Anspruchs 1.

Dadurch wird erreicht, daß die Faser- bzw. Faden-Gas-Dispersion im Anschluß an die plötzliche Querschnittserweiterung relativ stark aufgeweitet wird, so daß die Fäden oder Fasern größeren gegenseitigen Abstand erhalten und ihre Kontaktwahrscheinlichkeit minimiert wird. Stromab der plötzlichen Querschnittserweiterung bilden sich beidseitig in den Rückströmzonen sogenannte Einschlagwirbel, welche strömungstechnisch die Berandung der Hauptströmung darstellen. Unmittelbarer Wandkontakt von Fadenbestandteilen wird im Bereich der Einschlagwirbel somit dadurch vermieden, daß die Strömungsberandung durch eine andere Strömung und nicht durch eine feste Wand gebildet wird. Der Einschlagwirbel entzieht seine Bewegungsenergie den benachbarten Schichten der Hauptströmung, so daß dort Geschwindigkeit abgebaut und das Geschwindigkeitsprofil stromab des Einschlagwirbels stärker vergleichmäßigt wird. Dadurch sinkt die Tendenz zu Querbewegungen von Fadenbestandteilen oder Fasern und damit auch die Wahrscheinlichkeit des Wandkontaktes stromab der Einschlagwirbel. Durch die relativ starke Aufweitung der Hauptströmung im Bereich der Einschlagwirbel bei noch stark randbetontem Geschwindigkeitsprofil ergibt sich dennoch eine erhöhte zusätzliche Ausziehwirkung auf die Fadenbestandteile im Hinblick auf die vergrößerte räumliche Entfernung der randseitigen Geschwindigkeitsspitzen voneinander und ihre Sogwirkung; dieses weitere Ausziehen der Fasern vor ihrer endgültigen Verfestigung führt jedoch nicht zur erhöhten Gefahr von Wandkontakt, da die Einschlagwirbel vor Wandkontakt schützen.

Auf diese Weise wird insgesamt die aus der Blasdüse kommende Strömung schnell relativ stark aufgeweitet und vergleichmäßigt. Infolge der für die Fadenbestandteile relativ gleichmäßigen Ausziehbedingungen bis in den Unterschalldiffusor hinein ergibt sich eine enge Durchmesserverteilung bei guter Faserfeinheit; infolge der schonenden Verzögerung in einer vergleichmäßigten relativ stark aufgeweiteten Strömung ohne Wandkontakt ergibt sich eine große mittlere Faserlänge bei sehr geringem Perlenanteil.

Wenn nur eine einzige plötzliche Querschnittserweiterung der Strömungsberandung vorgesehen ist, so liegt diese gemäß Anspruch 2 bevorzugt am Übergang von der Blasdüse zum Unterschalldiffusor. Damit wird erreicht, daß die Aufweitung der Hauptströmung zum frühestmöglichen Zeitpunkt erfolgt, zu dem die Fadenbestandteile noch gut zusätzlich auszuziehen sind. Die weitere Strömung im Unterschalldiffusor erfolgt dann bereits in aufgeweitetem Zustand mit entsprechend verminderter Kontaktwahrscheinlichkeit der Fäden bzw. Fasern untereinander.

Die Verwendung eines Stoßdiffusors vermindert gegenüber einem sich kontinuierlich erweiternden Diffusor den Wirkungsgrad der Druckumsetzung und bewirkt somit für sich gesehen eine Erhöhung des erforderlichen Energieeintrags. Wird hingegen gemäß Anspruch 3 ein mehrstufiger Stoßdiffusor verwendet, ein sogenannter Stufendiffusor, so verbessert sich dessen Wirkungsgrad in Annäherung an denjenigen eines kontinuierlich beranderten Unterschalldiffusors. Weiterhin wir durch eine Mehrzahl von Stufen erreicht, daß die Hauptströmung über eine größere Länge des Unterschalldiffusors nicht durch eine feste Wand, sondern durch die Einschlagwirbel berandet ist, so daß die oben geschilderten vorteilhaften Effekte verstärkt auftreten und insgesamt die Kontaktwahrscheinlichkeit der Fasern oder Fäden mit einer festen Strömungsberandung erheblich sinkt. Weiter kann eine noch stärkere Aufweitung der Hauptströmung ohne Ablösungserscheinungen erfolgen, so daß die Kontaktwahrscheinlichkeit der Fäden oder Fasern untereinander sinkt.

Die Länge jeder Stufe des Stoßdiffusors sollte gemäß Anspruch 4 das 5- bis 6-fache der Differenz der Wurzeln ihres Austritts- und ihres Eintrittsquerschnittes nicht unterschreiten, damit sich die Hauptströmung vor einer folgenden Stufe nochmals über eine kurze Strecke sauber an die feste Strömungsberandung anlegen kann; andernfalls besteht die Gefahr großräumiger Verwirbelungen mit der unerwünschten Folge von lokal meist stabilen, starken Strömungs-Ungleichverteilungen.

Gemäß Anspruch 5 kann der mittlere Erweiterungswinkel des Unterschalldiffusors durchaus auch klein gehalten werden, wie es bei kontinuierlichen Unterschalldiffusoren notwendig ist, er kann jedoch auch bis auf etwa 8° vergrößert werden, um eine maximale Aufweitung der Hauptströmung auf geringstmöglicher Länge zu erzielen. Im Sinne einer Maximierung der Faserlänge sowie Minimierung des Perlenanteiles erscheint ein größtmöglicher mittlerer Erweiterungswinkel vorteilhaft.

Im Rücken der Einschlagwirbel können sich bei rechtwinkliger Ausbildung des Übergangs von der Zone erweiterten Querschnitts zur Unterfläche der Stufe (Rücksprung) Totzonen mit Sekundärwirbeln ausbilden. Wenn die Einschlagwirbel feinste Faserbestandteile erfassen und mitführen, so kann es in diesen Totzonen zu Ablagerungen solcher feinster Fasern kommen. Um dies zu vermeiden, können die Kehlen der Rücksprünge mit entsprechenden Rundungen oder Schrägen so ausgebildet werden, daß sie der Form des Einschlagwirbels in dieser Zone angepaßt sind und auf diese Weise derartige Totzonen vermieden sind. Gemäß Anspruch 6 bevorzugt ist jedoch eine Auskehlung an dieser Stelle mit einem gegenüber dem erweiterten Querschnitt weiter vergrößerten Querschnitt. In dieser kann sich ein Sekundärwirbel hinter dem Einschlagwirbel voll ausbilden und im Sinne einer Aufzehrung der Geschwindigkeitsenergie der Randzonen der Hauptströmung positiv genutzt werden, oder es legt sich der Einschlagwirbel selbst in eine entsprechend große, gerundete Auskehlung. Während geringe Ablagerungen in einer solchen weit von der Hauptströmung entfernten Auskehlung nicht stören, können dadurch auch diese durch entsprechend gerundete Ausbildung im Sinne eines Selbstreinigungseffektes vermieden werden.

Insbesondere in stromaufwärts gelegenen Diffusorstufen, in deren Höhe die Fäden noch schmelzflüssig vorliegen, kann es stromab der plötzlichen Querschnittserweiterung infolge hoher Querbeschleunigungen, die zur Erzielung zusätzlicher Auszieheffekte an sich erwünscht sind, doch noch zu Wandkontakten etwa im Auslaufbereich der Einschlagwirbel (Staupunkt) kommen. Um diese Gefahr weiter zu vermindern, können an den oder unterhalb der Stellen der plötzlichen Querschnittserweiterung Düsen zur Zuführung von Blasmedium vorgesehen werden. Hierdurch wird ein zusätzliches Kissen zwischen der Hauptströmung und der Wand gebildet und somit die Gefahr von Wandkontakten weiter minimiert.

Gemäß Anspruch 8 kann dabei die Achse der Düsen wenigstens annähernd parallel zur Mittelachse des Unterschalldiffusors liegen, also eine wandparallele Eindüsung erzielt werden. Hierdurch kann bei Bedarf verlustarm auch zusätzliche Energie etwa im unteren Bereich des Unterschalldiffusors eingetragen werden, wenn das Geschwindigkeitsprofil infolge der Abbremsung seiner Randzone zu mittenbetont zu werden droht.

Gemäß Anspruch 9 kann die Achse der Düsen jedoch auch quer zur Mittelachse des Unterschalldiffusors angeordnet sein, wobei die Düsen stromabwärts, etwa im Bereich einer Auskehlung in der Kehle des Rücksprungs angeordnet sein können. Hierdurch bildet sich ein stabiler Wirbel in der Auskehlung aus, während die Hauptströmung durch das Blasmedium von der Wand abgedrängt und so Wandkontakt der Fäden oder Fasern unterbunden ist. In energetisch besonders günstiger Weise ist das Blasmedium gemäß Anspruch 10 aber bevorzugt über eine gekrümmte äußere bzw. untere Begrenzungsfläche in Richtung auf Parallellage zur Hauptströmung umgelenkt, so daß sich ein Coanda-Effekt der ersten Art einstellt und eine zu starke Einschnürung der Hauptströmung vermieden wird.

In der Praxis wird häufig eine Vielzahl nebeneinander angeordneter Primärfäden in einer langgestreckten Blasdüse zerfasert, an deren Unterseite ein entsprechend langgestreckt ausgebildeter Unterschalldiffusor angeordne sein kann. Im Hinblick auf die geringe Breite des Spaltes an den Stirnseiten der Blasdüse und des Unterschalldiffusors bleiben die stirnseitigen Enden dabei zur Umgebung offen. Dies führt jedoch bei Verwendung eines Unterschalldiffusors mit Querschnittserweiterung zu einer stirnseitigen Störung. Diese Störung ist um so gravierender, je größer der mittlere Erweiterungswinkel und je länger der Unterschalldiffusor ist, da mit dem Abstand der Strömungsberandungen des Unterschalldiffusors voneinander die Menge der stirnseitig angesaugten Falschluft drastisch steigt. Gemäß Anspruch 11 ist daher in einem solchen Falle vorgesehen, daß der langgestreckte Unterschalldiffusor durch Stirnwände gegenüber der Umgebung abgeschlossen ist. Hierdurch wird eine ungestörte Strömungsausbildung im Unterschalldiffusor und insbesondere im Bereich der Einschlagwirbel unterstützt. Weiter wird hierdurch, ggfs. im Verein mit einem entsprechenden stirnseitigen Abschluß der Blasdüse, die insgesamt angesaugte Menge an Falschluft drastisch reduziert und damit auch die erforderliche Absaugeleistung bei der Faserablage vermindert. Hierdurch ergibt sich ein Gewinn in der Energiebilanz, der den geringeren Wirkungsgrad der Druckumsetzung im Stoßdiffusor ausgleicht.

Gemäß Anspruch 12 ergibt sich eine weitere Vergleichmäßigung der Strömungsbedingungen über die gesamte Länge des langgestreckten Unterschalldiffusors, wenn die stirnseitigen Wände in ihrer Stufung entsprechend den Seitenwänden des Unterschalldiffusors ausgebildet sind. Wenn gemäß Anspruch 13 auch an den Stirnwänden der Blasdüse Blasmedium eingedüst wird, so werden weiterhin jegliche Endeffekte aufgrund des Umstandes vermieden, daß sich infolge der stirnseitigen Eindüsung von Blasmedium ein dem statischen Druck des längsseitigen Geschwindigkeitsprofils entsprechender Unterdruck einstellen läßt und somit eine stirnseitige Strömungsablösung vermieden wird.

Trotz aller geschilderter Maßnahmen kann es insbesondere im Bereich der Blasdüse, aber auch im Bereich des Unterschalldiffusors, etwa kurz oberhalb einer Stufe, zu Wandkontakten zwischen den Fäden und der festen Strömungsberandung kommen. Abgesehen von den schädlichen Auswirkungen in Bezug auf die Erhöhung des Perlenanteiles des Fasergemisches führt dies auch zu Verschleiß an der Wand der Blasdüse bzw. des Unterschalldiffusors. Um jegliches Anhaften von in Wandkontakt geratenen Fadenbestandteilen mit der Gefahr einer gefährlichen Verstopfung zu vermeiden, wurde insbesondere die Blasdüse bislang aus reinem Nickel gefertigt, welches eine mikroskopisch feinste Oberfläche besitzt, die durch ihre extreme Glätte ein Abgleiten des Fadens gewährleistet; dafür aber ist Nickel wenig verschleißfest, so daß häufige Wartungs- und Reparaturarbeiten erforderlich sind.

Hier schafft die Erfindung dadurch Abhilfe, daß die Seitenwände der Blasdüse und/oder des Unterschalldiffusors Kühlkanäle für den Durchtritt eines Kühlmittels aufwei sen, so daß die festen Strömungsberandungen einer intensiven Kühlwirkung ausgesetzt sind. Infolge der starken Kühlung der Strömungsberandung kühlt ein Fadenbestandteil bei Wandkontakt schlagartig ab, so daß er ohne Benetzung oberflächenverfestigt und abprallt. Damit ist auch ohne extrem glatte Oberfläche ein Ankleben von Schmelzebestandteilen und ein überfluten der Blasdüse mit Schmelze ausgeschlossen. Daher können die Blasdüsenflanken ebenso wie die Seitenwände des Unterschalldiffusors aus einem billigeren, aber dennoch verschleißfesten Werkstoff wie etwa Edelstahl gebildet werden, der in hochwarmfester Ausführung relativ hoch legiert ist und eine höhere mikroskopische Rauhigkeit besitzt.

Darüberhinaus wird mittels des Kühlmediums soviel Wärme abgeführt, daß das Klima in dem nachgeschalteten Schacht entlastet wird, also etwa die Gefahr eines vorzeitigen Aushärtens von Bindemittel noch im Fallschacht vermindert wird. Weiterhin können die Blasdüsenhälften infolge ihrer verschleißfesten Ausführung enger aneinander gebracht werden, wodurch sich das Temperaturniveau in den Zerfaserungszonen erhöht und so die Bildung feinerer und perlenärmerer Fasern auch von dieser Seite her begünstigt wird. Weiterhin wird auch durch diese Maßnahme der Anteil der angesaugten Umgebungsmedien verringert, so daß kleinere Gasmengen durch das Produkt hindurch abgesaugt und nachbehandelt werden müssen. Einen weiteren Beitrag hierzu leistet im übrigen auch der hohe Druckrückgewinn in der Austrittsebene des Stoßdiffusors mit großem Erweiterungswinkel, mit der Folge, daß durch die geringere Austrittsgeschwindigkeit der Faser-Gas-Dispersion aus der Austrittsebene des Diffusors vermindert Falschluft angesaugt wird. Alle diese Maßnahmen, zusammen mit dem stirnseitigen Abschluß von Blasdüse und Unterschalldiffusor, vermindern den Energiebedarf bei der Absaugung und Nachbehandlung der Luft durch das Produkt hindurch so erheblich, daß der erhöhte Energieertrag durch den geringeren Wirkungsgrad eines Stoßdiffusors gegenüber einem sich kontinuierlich erweiternden Diffusor mehr als ausgeglichen wird.

Weitere Einzelheiten, Merkmale und Vorteile der Erfindung ergeben sich aus der nachfolgenden Beschreibung von Ausführungsformen anhand der Zeichnung:

Es zeigt

Fig. 1 schematisch vereinfacht einen Schnitt durch eine erfindungsgemäße Einrichtung zur Zerfaserung von Mineralfaserschmelze mit dreistufigem Unterschalldiffusor,

Fig. 2 in einer Fig. 1 im wesentlichen entsprechenden Darstellung eine abweichende Ausführungsform mit zweistufigem Unterschalldiffusor und Zuführung von Umgebungsmedium zwischen der Blasdüse und dem Unterschalldiffusor,

Fig. 3 eine Einzelheit gemäß Kreis A in Fig. 1 in abgewandelter Ausführungsform und vergrößerter Darstellung,

Fig. 4 eine Fig. 3 entsprechende Darstellung der Einzelheit in weiter abgewandelter Ausführungsform,

Fig. 5 eine den Fig. 3 und 4 entsprechende Einzelheit in weiter abgewandelter Form,

Fig. 6 in einer im wesentlichen den Fig. 3 bis 5 entsprechenden Darstellung den Bereich der Rückströmung in einer Stufe des Unterschalldiffusors mit Zuführung von Blasmedium,

Fig. 7 in einer Fig. 6 entsprechenden Darstellung eine abgewandelte Ausführungsform,

Fig. 8 in einer den Fig. 6 und 7 entsprechenden Ausführung eine weiter abgewandelte Ausführungsform,

Fig. 9 schematisch vereinfacht einen Längsschnitt durch den Diffusor gemäß Fig. 1 und

Fig. 10 in einer Fig. 1 entsprechenden Darstellung einen Schnitt durch die Blasdüse der Einrichtung gemäß Fig. 1 mit Sicht auf ihr stirnseitiges Ende.

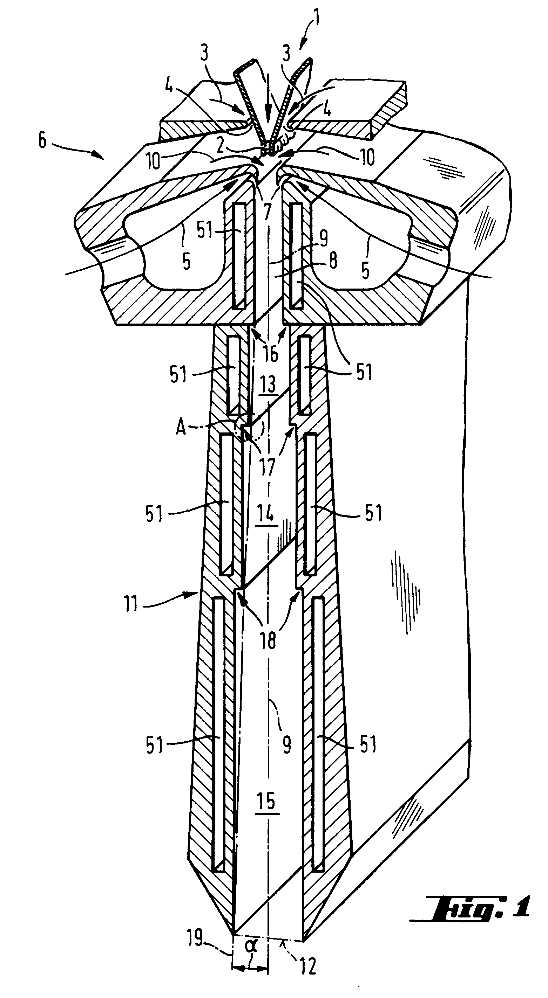

Wie aus Fig. 1 ersichtlich ist, wird Schmelze, im Beispielsfalle Mineralschmelze, aus einer nicht näher dargestellten Schmelzewanne einem mit 1 bezeichneten Schmelzezerteiler zugeführt, und tritt im Beispielsfalle in Form einer Mehrzahl nebeneinander angeordneter Primärfäden aus Bohrungen 2 des Schmelzezerteilers 1 aus. Aus Gründen der Übersichtlichkeit ist die Schmelze selbst nicht dargestellt. Die in einer Reihe befindlichen Bohrungen 2 weisen im Beispielsfalle einen Durchmesser von ca. 1 bis 2 mm auf und haben eine Teilung von etwa dem 2fachen Bohrungsdurchmesser. Diese Abmessungen können sich jedoch je nach Schmelze nach oben oder unter ändern. Der Auslaufbereich des Schmelzezerteilers 1 wird im vorliegenden Falle durch heiße Verbrennungsgase 3 temperiert, wobei letztere durch einen engen Spalt 4 zu beiden Seiten des Auslaufbereichs des Schmelzezerteilers 1 unter hoher Geschwindigkeit austreten und in der Zone der Bildung und Bewegung der Primärfäden die Schmelzeteilströme umhüllen. Der Schmelze-Massenstrom je Austrittsöffnung wird durch die Temperatur und den geostatischen Druck der Schmelze, den Bohrungsdurchmesser sowie die Höhe des statischen Unterdrucks in der Austrittsebene der Bohrungen 2 bestimmt. Dieser wird im allgemeinen durch Einblasen eines Blasmediums 5 aus Düsenöffnungen erzeugt, das in einer insgesamt mit 6 bezeichneten Blasdüse zugeführt wird und durch im Beispielsfalle schlitzförmige Düsenöffnungen 7 im oberen Bereich eines Ziehspaltes 8 der Blasdüse eintritt. Das Einblasen des Blasmediums 5 durch die Blasdüsen 7 erfolgt zu beiden Seiten des Ziehspaltes 8 im wesentlichen wandparallel bzw. parallel zur Mittelachse 9 der Blasdüse 6. Dabei wird der im Ansaugbereich vorgezogene Primärfaden zu Schwingungen quer zur Hauptströmungsrichtung angeregt, von den schnellen Wandstrahlen erfaßt und weiter beschleunigt und verzogen. Die Strömungsgeschwindigkeit der ausziehenden Gasströme, die sich aus dem eigentlichen Blasmedium 5 als Treibmittel sowie den angesaugten heißen Verbrennungsgasen 3 und dem bei 10 veranschaulichten Umgebungsmedium (Sekundärluft) zusammensetzen und entsprechend der konvergierend-divergierenden Kontur der Blasdüse 6 durchaus Überschallgeschwindigkeit annehmen können, wird in einem nachgeschalteten Unterschalldiffusor 11 abgebaut. Je enger der Unterschalldiffusor 11 ist, desto feinere aber auch kürzere Fasern werden erhalten. Wird der Unterschalldiffusor 11 in der üblichen Weise mit kontinuierlicher Strömungskontur ausgebildet, so sind bei den üblichen Strömungsgeschwindigkeiten nur Erweiterungswinkel von maximal etwa 2° möglich, ohne Strömungsabrisse mit stark turbulenten Schwankungsbewegungen zu erhalten. Insbesondere bei langgestreckten, "ebenen" Unterschalldiffusoren 11, die stirnseitig offen ausgeführt sind, lassen sich bei größerem Erweiterungswinkel keine homogenen Faserablagebedingungen mehr erzielen.

Beim Verlassen des Unterschalldiffusors 11 ist der Faserbildungsprozeß in der Regel abgeschlossen. Üblicherweise wird dann die Faser-Luft-Dispersion unter Zugabe von Kühlmedien, Schlichten, Bindemittel und-/oder weiteren Konditionierungsmitteln sowie unter Ansaugung von weiterer Falschluft in einem Fallschacht weiter abgebremst und abgekühlt. An einem darunter befindlichen perforierten Austrageband werden die Fasern in Form eines Vlieses abgelegt und durch unter dem Austrageband angeordnete Unterdruckkammern mit nachgeschalteten Ventilatoren von den ausziehenden und angesaugten Gasen getrennt.

Ein wesentlicher Unterschied der Einrichtung gemäß Fig. 1 gegenüber bekannten Einrichtungen besteht darin, daß der Unterschalldiffusor 11 nicht eine kontinuierliche Strömungsberandung zwischen dem unteren Ende des Ziehspaltes 8 und seiner mit 12 bezeichneten Austrittsebene aufweist, sondern als Stoßdiffusor mit im Beispielsfalle drei Stufen 13, 14 und 15 seiner Strömungsberandung mit plötzlichen Querschnittserweiterungen oder Rücksprüngen 16, 17 und 18 ausgebildet ist. Die an sich bekannten Ein- oder Mehrfach-Stoßdiffusoren zeichnen sich dadurch aus, daß die Hauptströmung an den Stellen plötzlicher Querschnittserweiterung abreißt und sich unter Bildung einer Rückströmzone erst nach einer bestimmten Strömungslänge wieder an die feste Strömungsberandung anlegt. Je höher die Anzahl der Stufen 13, 14 oder 15, um so besser ist der Wirkungsgrad des Umsatzes von dynamischer in statische Druckenergie.

Bei der Einrichtung gemäß Fig. 1 können die einzelnen Querschnittserweiterungen oder Rücksprünge 16, 17, 18 sowie die Längen der einzelnen Stufen 13, 14 und 15 so bemessen werden, daß die den ausziehenden Gasströmen mit einem bestimmten Schlupf folgenden Schmelze- und Faserbestandteile erst jeweils am unteren Stufenende die feste Strömungsberandung des Unterschalldiffusors 11 berühren können, wobei eventuell auftretende Wandkontakte beinahe wandparallel erfolgen und sich dadurch nur unbeträchtliche Abbremsungen und Abkühlungen von Schmelzefäden mit nachfolgender Perlenbildung ergeben.

Die Länge der einzelnen Stufen 13, 14 und 15 sollte so gewählt werden, daß sich in der Stufenaustrittsebene keine Rückströmzonen mehr ausbilden, da diese zu großräumigen Strömungen führen können, die meist instabil sind und eine ungleichmäßige Faserführung zur Folge haben. Unter diesem Gesichtspunkt beträgt die bevorzugte Mindestlänge der Stufen 13, 14 und 15 etwa das 5- bis 6-fache der Differenz der Wurzeln des jeweiligen Austritts- und Eintrittsquerschnitts jeder Stufe 13, 14 und 15.

Dabei wird gemäß Fig. 1 bereits der Übergang vom Ziehspalt 8 zum Unterschalldiffusor 11 als Stoß ausgeführt, um möglichst frühzeitig die räumliche Konzentration von Fäden bzw. Fasern soweit abzusenken, wie es die gewünschte Faserlänge erfordert, die durch gegenseitige Faser- bzw. Fadenkontakte beeinflußt wird. Dem Fachmann steht es damit frei, die durch die Querschnittserweiterung und die Länge der jeweiligen Stufen 13, 14 und 15 gegebenen Erweiterungswinkel für die Hauptströmung so zu bemessen, daß das Produkt hinsichtlich Feinheit, Perlengehalt und Längenverteilung der Fasern den jeweiligen Anforderungen genügt.

Die in der Blasdüse 6 erzeugten, im wesentlichen parallelen Wandstrahlen können je nach Betriebsbedingungen durchaus Schallgeschwindigkeit erreichen und überschreiten. Die damit verbundenen Verdichtungsstöße werden an der plötzlichen Querschnittserweiterung am Austritt des Ziehspaltes 8 gezielt provoziert, da sie an dieser Stelle noch faserfeinheitsbegünstigend auf die Primärfadenvervielfältigung einwirken können.

Die Wände des Ziehspaltes 8 sind zweckmäßig parallel, können aber auch konisch erweiternd mit einem Neigungungswinkel von bis zu etwa 2° ausgeführt sein. Gleichermaßen können auch die Wände der Stufen 13, 14, und 15 des Unterschalldiffusors 11 nicht nur parallel, sondern auch konisch erweiternd ausgeführt werden, solange damit noch eine sichere, d. h. gleichmäßige Strömungsführung gewährleistet ist. Besonders bevorzugt sind jedoch die Wände der einzelnen Stufen 13, 14 und 15 des Unterschalldiffusors 11 parallel ausgebildet.

Der mittlere Erweiterungswinkel gemäß der strichpunktiert eingezeichneten Linie 19 ist mit $\alpha$ bezeichnet und kann zwischen ca. 0,4° und 8° gewählt werden, bevorzugt mit etwa 4° bis 7°. Der Erweiterungswinkel der einzelnen Stufen 13, 14 und 15 ist vorzugsweise konstant, kann aber auch entsprechend den Erfordernissen variieren. Ebenso kann die Anzahl der Stufen 13, 14 und 15 pro Länge den Erfordernissen entsprechend gewählt werden, wobei eine einzige Stufe den einfachsten Fall darstellt. Weiterhin kann die Länge des Unterschalldiffusors 11 den Notwendigkeiten bzw. Produkterfordernissen angepaßt werden, wobei mit längerem Unterschalldiffusor 11 auch eine längere Faser erhalten wird, sofern der Diffusorerweiterungswinkel ausreichend bemessen wurde.

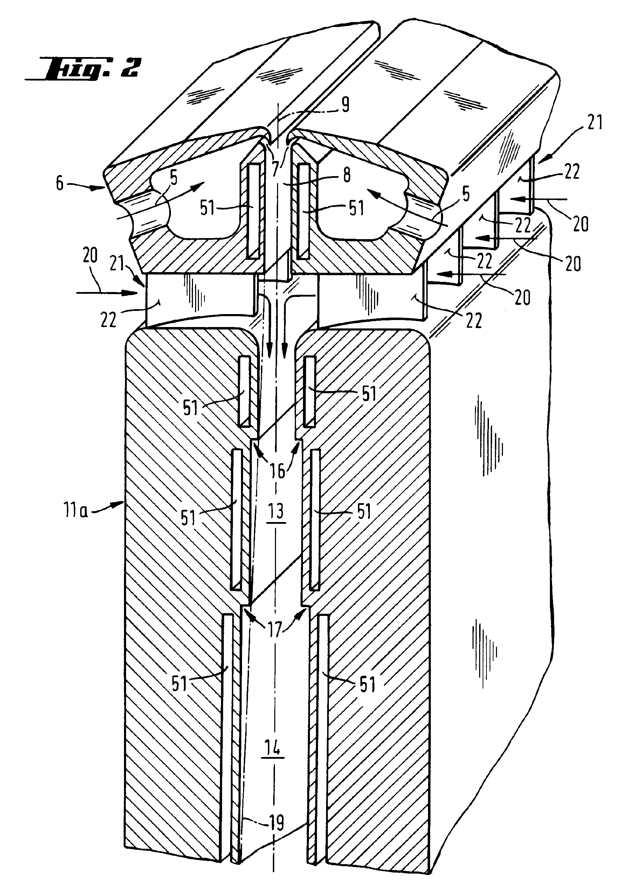

In Fig. 2, bei der ebenso wie bei den anderen Ausführungsformen entsprechende Bauteile mit gleichen Bezugszeichen bezeichnet sind, ist ein im Beispielsfalle zweistufiger Unterschalldiffusor 11a veranschaulicht, dessen Eingangszone, die nicht als Stufe mit plötzlicher Querschnittserweiterung ausgebildet ist, nicht direkt am Ausgangsquerschnitts des Ziehspaltes 8 anschließt, sondern im Abstand hiervon liegt. Hierdurch wird, wie es für bestimmte Zerfaserungsbedingungen und für bestimmte Produkte erwünscht sein kann, zwischen der Blasdüse 6 und dem Unterschalldiffusor 11a zusätzlich Umgebungsmedium 20 eingesaugt und der Hauptströmung im Unterschalldiffusor 11a zugeführt. Diese Zuführung von Umgebungsmedium 20 erfolgt mittels eines Leitkörpers 21 mit parallelen Leitwänden 22 in Form von Leitblechen, die vorzugsweise senkrecht zu den Blasdüsenlängsseiten und parallel zur Hauptströmungsrichtung angeordnet sind. Hierdurch werden bei einer langgestreckten Ausbildung der Blasdüse 6 und des Unterschalldiffusors 11a trotz der Zufuhr zusätzlichen Umgebungsmediums 20 am Eingang des Unterschalldiffusors 11a praktisch zweidimensionale Strömungsbedingungen aufrechterhalten. Prinzipiell kann der Eintritt des zusätzlichen Umgebungsmediums auch nach ein bis mehreren plötzlichen Querschnittserweiterungen erfolgen.

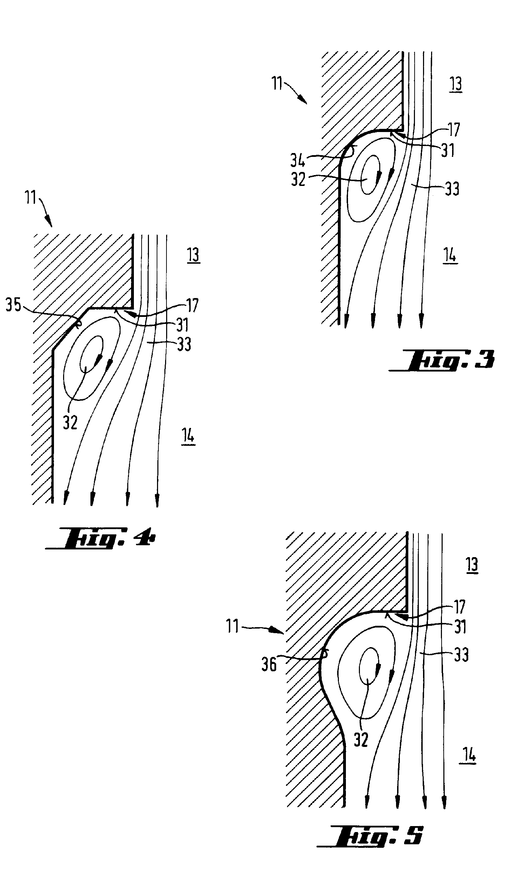

In Fig. 3 ist eine Einzelheit A aus Fig. 1 beim Übergang im Beispielsfalle von der Stufe 13 zur Stufe 14 veranschaulicht. Wie daraus näher ersichtlich ist, wird die Rücksprungfläche 31 des Rücksprungs 17 zwischen Stufe 13 und Stufe 14 durch eine an die vertikale Strömungsberandung der Stufe 13 senkrecht anschließende horizontale Wand gebildet, die in die vertikale Strömungsberandung im Bereich der Stufe 14 übergeht. Wird dieser Übergang, wie in Fig. 1 schematisch veranschaulicht ist, ebenfalls rechtwinklig ausgeführt, so entsteht eine Totzone, in der der in Fig. 3 mit 32 bezeichnet Einschlagwirbel in der Rückströmzone der Stufe 14 aus der Hauptströmung 33 entnommene feinste Faserbestandteile ablagern kann. Aus diesem Grunde ist dieser Übergang bei der Ausbildung gemäß Fig. 3 als Rundung 34 ausgeführt.

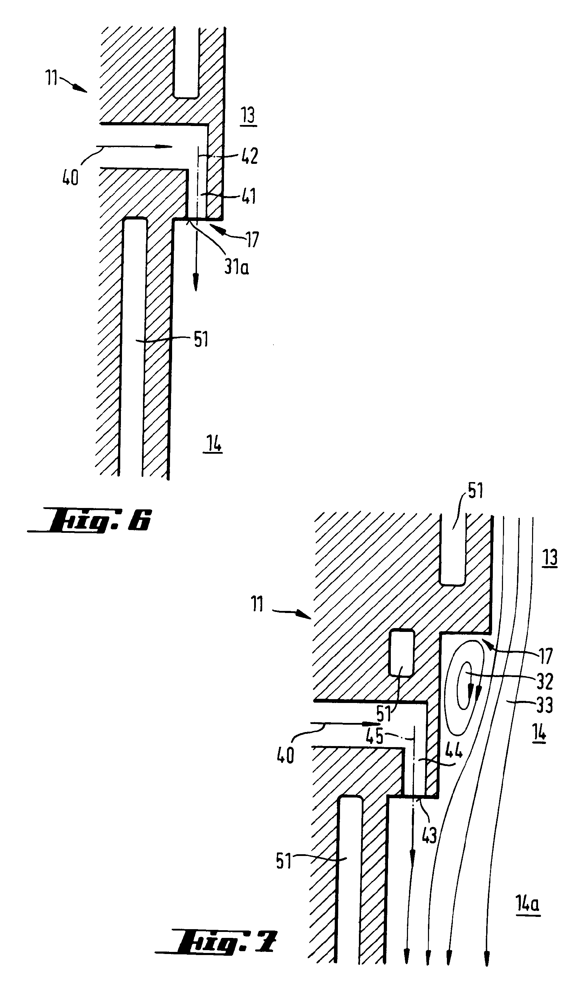

Entsprechend ist bei der Ausführungsform gemäß Fig. 4 der übergang zwischen der Rücksprungfläche 31 und der vertikalen Strömungsberandung der Stufe 14 als Schrägfläche 35 ausgebildet.

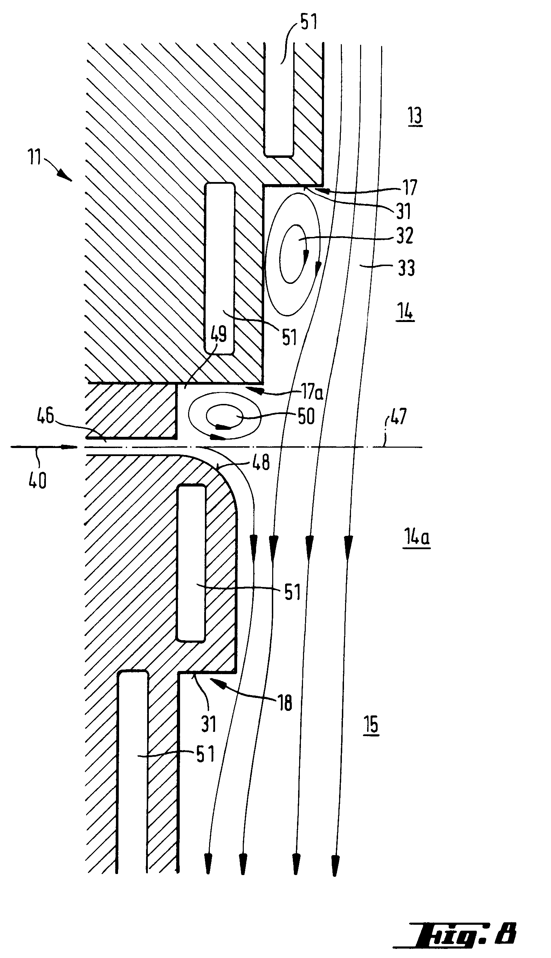

Bei der Ausführungsform gemäß Fig. 5 ist der übergang als Auskehlung 36 ausgebildet, welche gegenüber der Querschnittserweiterung zwischen den Stufen 13 und 14 noch weiter vergrößerten Querschnitt aufweist. Wird eine solche Auskehlung in der Dimensionierung gemäß Fig. 5 vorgenommen, so kommt in ihr der Einschlagwirbel 32 zu liegen. Bei verminderter axialer Ausdehnung der Auskehlung 36 am Rücksprung 17 zwischen den Stufen 13 und 14, die im Beispielsfalle zur Veranschaulichung des Übergangs herangezogen sind, kann sich auch ein langgestreckter Einschlagwirbel 32 bilden, an dessen Rückseite ein sekundärer Wirbel in Gegenrichtung in der Auskehlung 36 erzeugt wird. In jedem Falle wird mit den Ausbildungen gemäß den Fig. 3 bis 5 erreicht, daß Ablagerungen feinster Fasern in einem irgendwie merklichen Umfang vermindert werden und durch die Vermeidung ausgeprägter Toträume in Ecken ein Selbstreinigungseffekt erzielt wird.

Durch die Verwendung eines Unterschalldiffusors 11 gemäß Fig. 1 werden Fasern erhalten, die bei Faserlängen von etwa dem 1.000-fachen bis 10.000-fachen Faserdurchmesser und mehr wesentlich feiner und perlenärmer sind als bislang mit dem Düsenblasverfahren erreichbar. Eine weitergehende Verbesserung kann erzielt werden, wenn insbesondere in der ersten Stufe 13 weitere Schritte zur Faserführung unternommen werden. Dort kann es bei geringen Querschnittserweiterungen infolge hoher Querbeschleunigungen der noch schmelzflüssigen Fäden zu unerwünschten Wandkontakten kommen, die neben Perlenbildung einen erhöhten Verschleiß am Material der festen Strömungsberandung des Unterschalldiffusors 11 zur Folge haben.

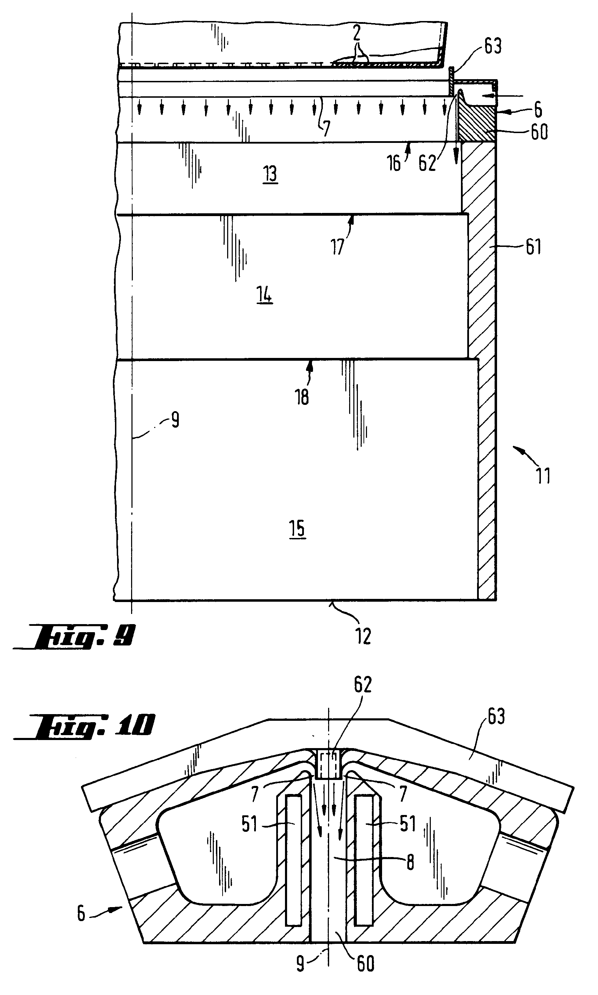

Dem kann dadurch begegnet werden, daß unterhalb zumindest der ersten Rücksprungfläche 31 weitere Wandstrahlen eines zusätzlichen Treibmediums, vorzugsweise Druckluft, erzeugt werden, wie dies in den Fig. 6 und 7 dargestellt ist. Gemäß Fig. 6 erfolgt die Eindüsung von zusätzlichem Blasmedium 40 in Düsen 41 an einer Rücksprungfläche 31a, wobei die Achsen 42 der Düsen 41 im wesentlichen parallel zur Längsmittelachse 9 des Unterschalldiffusors 11 angeordnet sind. Gemäß Fig. 7 erfolgt die Eindüsung des Blasmediums 40 unterhalb der Rücksprungfläche 31 an einer weiteren Rücksprungfläche 43 über Düsen 44 mit Achsen 45, die ebenfalls im wesentlichen parallel zur Längsmittelachse 9 des Unterschalldiffusors 11 angeordnet sind. Während im Falle der Ausführung gemäß Fig. 6 das zusätzliche Blasmedium 40 die kissenartige Funktion des Einschlagwirbels 32 ersetzt, wird es bei der Ausführungsform gemäß Fig. 7 zusätzlich zu diesem unter Bildung einer weiteren Stufen 14a des Unterschalldiffusors 11 eingesetzt.

Bei der Ausführungsform gemäß Fig. 8 weist das Blasmedium 40 eine hohe Querkomponente bezüglich der Hauptströmungsrichtung auf und ist bevorzugt in der Nähe des Staupunkts der Rückströmzone angeordnet, die sich stromabwärts der Rücksprungfläche 31 ausbildet. Besonders bevorzugt wird das Einblasen von Querstrahlen des Blasmediums 40 in Düsen 46 mit quer zur Längsmittelachse 9 des Unterschalldiffusors 11 liegender Achse 47 kurz oberhalb der Anlagestelle der Hauptströmung angeordnet, um eine stärkere wandabweisende Wirkung zu erzielen bzw. einen Wandkontakt ganz zu vermeiden.

Bei der Ausführungsform gemäß Fig. 8 erfolgt die Zufuhr der Querstrahlen des Blasmediums 40 derart, daß die untere Begrenzungsfläche 48 für die Querstrahlen mit einem ausreichenden Krümmungsradius versehen ist, so daß die Querströmung dort der Krümmung folgt (Coanda-Effekt der ersten Art) und in die Hauptströmungsrichtung umgelenkt wird, ohne die Hauptströmung zu stark zu behindern bzw. "abzuschnüren". Die Düsen 41, 44 und 46 können als Schlitzdüsen ausgebildet sein, aber auch aus einer Reihe von Öffnungen, bevorzugt Bohrungen, bestehen. Die Austrittsebene der Querblasstrahlen durch Düsen 46 hindurch kann gegenüber der Längsmittelachse 9 des Unterschalldiffusors 11 um einen Winkel von ca. 10° bis 120° geneigt sein, bevorzugt um etwa 60° bis 90°.

Wesentlich bei der Zufuhr von Blasmedium 40 durch querliegende Düsen 46 ist weiterhin, daß deren untere Begrenzungsfläche 48 möglichst dicht an der Austrittsebene der Querstrahlen liegt, diese also führt, während die Öffnung der Düse 46 vom Rücksprung 17a entfernt in einer Auskehlung 49 liegt und auch gegenüber den senkrechten Strömungsberandungen der entsprechenden Diffusorstufe soweit zurückgesetzt ist, daß sich zusätzlich zum Einschlagwirbel 32 ein weiterer, gegensinnig drehender Wirbel 50 oberhalb der Ebene der Düsen 46 ergibt. Der weitere Wirbel 50 ist durch die geometrische Anordnung ortsfest.

Durch bei Bedarf entsprechende Justierbarkeit der Eindüsungsbedingungen des Blasmediums 40 durch Düsen 46 hindurch sind dem Fachmann in Zusammenwirkung mit den bereits erläuterten Maßnahmen weitreichende Mittel zur Beeinflussung der gewünschten Faserqualität hinsichtlich Feinheit, Perlengehalt und Länge an die Hand gegeben.

Die Einrichtung gemäß Fig. 1, ggfs. modifiziert, wie dies im Zusammenhang mit den Fig. 3 bis 8 näher erläutert ist, führt im Unterschalldiffusor 11 zu einer gleichmäßigen und starken Aufweitung und damit Abbremsung der Hauptströmung.

Dabei wird zugleich die Randbetonung des Geschwindigkeitsprofils aus dem Ziehspalt 8 durch den Energieverbrauch der Einschlagwirbel 32 sowie ggfs. weiterer Wirbel 50 verzehrt und so das Geschwindigkeitsprofil zunehmend vergleichmäßigt, wobei ein gezielter Energieeintrag bei zu starker Verzögerung der randseitigen Strömung durch Blasmedium 40 erfolgen kann. Infolge der starken Aufweitung der Strömung und damit des starken Druckanstiegs tritt die Faser-Gas-Dispersion an der Austrittsebene 12 des Unterschalldiffusors 11 mit vergleichsweise geringem Unterdruck gegenüber der Umgebung aus, so daß hier die Ansaugung von weiterer Falschluft minimiert ist. Dies verringert auch die Kosten für die Absaugung der insgesamt anfallenden Gasmengen durch das Austrageband hindurch.

Bei geringer Längserstreckung des Schmelzezerteilers 1 bzw. der Blasdüse 6 und des Unterschalldiffusors 11 und somit geringer Länge der Reihe von Primärfäden bzw. Austrittsbohrungen 2 können Blasdüse 6 und Unterschalldiffusor 11 bzw. 11a auch elliptischen oder runden Querschnitt statt langgestreckt rechteckförmigen Querschnitt aufweisen.

Bei ausreichend bemessener vertikaler Gesamtlänge eines der Blasdüse 6 nachgeschalteten Unterschalldifusors 11 bzw. 11a ist der eigentliche Zerfaserungsprozeß im wesentlichen abgeschlossen, wenn die Fasern die Austrittsebene 12 durchqueren. Es kann jedoch notwendig sein, in einem weiteren Schritt zusätzliche Maßnahmen hinsichtlich der Ablagebreite des erzeugten Faservlieses zu ergreifen. Dies kann dadurch erfolgen, daß der Austrittsquerschnitt 12 des Unterschalldiffusors 11 bzw. 11a mit dem Eintrittsquerschnitt eines Leitschachtes verbunden ist, der einen größeren Erweiterungswinkel quer zur Transportrichtung des Austragebandes aufweisen kann. Zwischen dem Unterschalldiffusor 11 bzw. 11a und dem Leitschacht kann dabei ein Eintritt von Falschluft zugelassen werden, wobei jedoch zur Erzielung zweidimensionaler Verhältnisse auf eine Leiteinrichtung entsprechend der Leiteinrichtung 21 zurückgegriffen werden sollte. Zur Bildung eines breiten Vlieses kann der Leitschacht in Transportrichtung des Austragebandes dabei so verjüngt ausgeführt werden, daß sich der Querschnitt des Leitschachtes in Hauptströmungsrichtung nicht ändert oder nur leicht zu- oder abnimmt. Bei einem Leitapparat entsprechend dem Leitapparat 21 zwischen dem Unterschalldiffusor 11 bzw. 11a und dem Leitschacht können an diesem querschnittsregulierende Mittel angebracht werden, die zur Korrektur von unerwünschten Gleichmäßigkeitsabweichungen des Faservlieses eingesetzt werden können. Der Leitschacht kann dabei so nahe an das Austrageband herangeführt werden, daß kein Fallschacht mit Aufnahme mehrerer Zerfaserungseinrichtungen mehr benötigt wird.

Wie aus der Zeichnung veranschaulicht ist, weisen die Wände des Ziehspaltes 8 der Blasdüse 6 und des Unterschalldiffusors 11 bzw. 11a Kühlkanäle auf, die insgesamt einheitlich mit 51 bezeichnet sind. Hierdurch erfolgt eine starke Kühlung der Flanken des Ziehspaltes 8 bzw. der festen Strömungsberandung des Unterschalldiffusors 11 bzw. 11a. Durch die Kühlung der Oberflächen, die in direktem Wärmeaustausch mit der Faserdispersion stehen, wird einerseits die Betriebssicherheit erhöht, da an heißen Oberflächen zufällig auftreffende Schmelzebestandteile eher kleben bleiben und ein Überfluten der Blasdüse 6 mit Schmelze nach sich ziehen würden. Jedoch können hierdurch auch die bisher vorzugsweise aus Nickel gefertigten Blasdüsenflanken in einem billigeren Werkstoff gefertigt werden, beispielsweise Edelstahl, der zudem verschleißfester ist. Andererseits wird mit dem Kühlmedium soviel Wärme abgeführt, daß das Klima in einem nachgeschalteten Fallschacht entlastet wird, das heißt die Gefahr des vorzeitigen Aushärtens von Bindemittel noch im Fallschacht vermindert wird. Die mit dem Kühlmedium abtransportierte Wärme kann ggfs. anderweitig genutzt werden.

Ein weiterer Vorteil der Verwendung von Kühlkanälen 51 liegt darin, daß die Blasdüsenhälften enger aneinander gebracht werden können, wodurch der Anteil der angesaugten Umgebungsmedien verringert wird. Dadurch müssen auch entsprechend kleinere Gasmengen durch das Produkt abgesaugt und nachbehandelt werden. Außerdem erhöht sich bei geringeren Flankenabständen das Temperaturniveau in den Zerfaserungszonen, wodurch die Bildung feinerer und perlenärmerer Fasern begünstigt wird.

Fig. 9 zeigt einen hälftigen Längsschnitt durch die Einrichtung gemäß Fig. 1 und veranschaulicht, daß die Blasdüse 6 und der Unterschalldiffusor 11 an den Stirnseiten durch Stirnwände 60 und 61 geschlossen sind. Auf diese Weise werden sogenannte Endeffekte vermieden, welche im Bereich der Stirnseiten zu Abweichungen von den an sich zweidimensionalen Strömungsbedingungen führen. Weiter wird dadurch vermieden, daß stirnseitig in ggfs. erheblichem Umfang Falschluft angesaugt wird, die nach Durchtritt durch das Austrageband wieder entsorgt werden muß.

Im Beispielsfalle sind stirnseitig weitere Vorrichtungen zur Strömungsführung vorgesehen, bestehend aus zwischen den Blasdüsenhälften angeordneten Einrichtungen zur Erzeugung eines genügend hohen Unterdrucks an den stirnseitigen Strömungsbrandungen, hier ausgeführt als Düsen 62, durch welche weitere Treibstrahlen eines Blasmediums, vorzugsweise Druckluft hoher Geschwindigkeit im wesentlichen parallel zur Hauptströmungsrichtung eingebracht werden. Gleichermaßen können auch an den inneren Stirnseiten des Unterschalldiffusors weitere Wandstrahldüsen angebracht werden, etwa nach Art von Fig. 6, 7 oder 8. Die Düsen 62 können als Schlitzdüsen ausgebildet sein, aber auch je mindestens eine Austrittsöffnung in Form einer Bohrung besitzen. Durch den stirnseitig aufgeprägten Unterdruck wird das Ablösen der Strömung bzw. der Aufbau eines erhöhten statischen Druckes an den Stirnseiten des Unterschalldiffusors 11 vermieden, der sich bei fehlender stirnseitiger Kapselung sowie infolge der dreidimensionalen Ansaugbedingungen an den Blasdüsenstirnseiten bilden und zu einer ungleichmäßigen Faserablage führen würde. Die Wirkung der stirnseitigen Zufuhr von Zusatz-Blasmedium kann weiter dadurch erhöht werden, daß die obere Abdeckfläche der stirnseitigen zusätzlichen Blasdüse 62 eine im wesentlichen senkrechte Strömungsberandung 63 aufweist, welche beispielhaft aus Blech ausgeführt ist und in ausreichender Höhe und Länge über die obere Fläche der Blasdüse 6 ragt, und für eine weitgehend zweidimensionale Ansaugung der am Zerfaserungsprozeß beteiligten heißen Verbrennungsgase und angesaugten Umgebungsmedien sorgt. Damit wird eine wesentlich gleichmäßigere Beheizung des Schmelzezerteilers 1 und nachfolgend eine homogenere Produktzusammensetzung erzielt.

Wie aus Fig. 9 ersichtlich ist, ist die Austrittsebene der zusätzlichen stirnseitigen Düsen 62 in Höhe der Düsen 7 angeordnet. Im Einzelfall kann die bevorzugte Höhenlage der Austrittsmündung der zusätzlichen Düsen 62 jedoch auch höher oder tiefer sein.

Die stirnseitigen Strömungsberandungen 63 der zusätzlichen Düsen 62 sind bevorzugt parallel zur Hauptströmungsrichtung angeordnet, können jedoch auch je mit Winkeln bis ca. 8° in beiden Richtungen dagegen geneigt sein. Die stirnseitigen Düsen 62 können innerhalb dieser Grenzen drehbar sein.

Die Stirnwände 61 im Bereich des Unterschalldiffusors 11 können eine kontinuierliche Strömungsberandung bilden, sind aber bevorzugt in gleicher Weise gestuft wie die Längswände des Unterschalldiffusors 11. Dabei können die Stufen der Stirnwände sowohl rechtwinklig zu den Längsseiten als auch halbkreisförmig abschließend ausgeführt sein.

Selbstverständlich können auch die Stirnwände 60 und 61 bei Bedarf mit Kühlkanälen 51 versehen werden.

Der Unterschalldiffusor 11 bzw. 11a gemäß Fig. 1 bzw. 2 kann im Prinzip beliebig lang ausgeführt werden. Bei entsprechend langer Ausführung kann die Strömung bei Zerfaserung mit mehreren Einheiten bis in direkter Nähe des Austragebandes geführt werden, wodurch sich gegenüber einem üblichen Fallschachtsystem Vorteile hinsichtlich der Rohdichteverteilung des Faservlieses ergeben.

**Patentansprüche**

1. Einrichtung zur Erzeugung von Fasern, insbesondere Mineralsfasern, aus einer Schmelze nach dem Düsenblasverfahren,

   mit einer Blasdüse (6), deren Ziehspalt (8) wenigstens ein Primärfaden der Schmelze zuführbare ist und dort unter Einwirkung seitlich in Richtung des Primärfadens eingedüster Blasströme zerfasert wird, und

   mit einem am Austritt der Blasdüse (6) anschließenden Unterschalldiffusor (11; 11a) zur Verzögerung der Gas-Faser-Dispersion unter Erstarrung der schmelzflüssigen Fäden zu verfestigen Fasern, dadurch gekennzeichnet,

daß der Unterschalldiffusor (11; 11a) als Stoßdiffusor mit mindestens einer plötzlichen Querschnittserweiterung (Rücksprung 16, 17, 18) der Strömungsberandung ausgebildet ist, derart, daß in der bei Stoßdiffusoren an sich bekannten Art eine Strömungsablösung in Strömungsrichtung hinter der Querschnittserweiterung erfolgt.

2. Einrichtung nach Anspruch 1, dadurch gekennzeichnet, daß eine einzige plötzliche Querschnittserweiterung (Rücksprung 16) am übergang von der Blasdüse (6) zum Unterschalldiffusor (11) vorgesehen ist.

3. Einrichtung nach Anspruch 1 oder 2, dadurch gekennzeichnet, daß der Unterschalldiffusor (11; 11a) eine Mehrzahl von hintereinander angeordneten Stufen (13, 14, 15) mit plötzlicher Querschnittserweiterung aufweist.

4. Einrichtung nach Anspruch 3, dadurch gekennzeichnet, daß die Länge jeder Stufe (13, 14,15) wenigstens das 5- bis 6-fache der Differenz der Wurzeln ihres Austritts- und ihres Eintrittsquerschnitts beträgt.

5. Einrichtung nach einem der Ansprüche 1 bis 4, dadurch gekennzeichnet, daß der mittlere Erweiterungswinkel ($\alpha$) des Unterschalldiffusors (11; 11a) zwischen 0,4° und 8°, bevorzugt zwischen 4° und 7° liegt.

6. Einrichtung nach einem der Ansprüche 1 bis 5, dadurch gekennzeichnet, daß zu Beginn der plötzlichen Querschnittserweiterung eine gerundete oder schräge Auskehlung (36) mit einem gegenüber dem erweiterten Querschnitts weiter vergrößerten Querschnitt vorgesehen ist. (Fig. 5)

7. Einrichtung nach einem der Ansprüche 1 bis 6, dadurch gekennzeichnet, daß an den oder unterhalb der Stellen der plötzlichen Querschnittserweiterung (Rücksprünge 16, 17, 18) Düsen (41, 44, 46) zur Zuführung von Blasmedium vorgesehen sind. (Fig. 6 bis 8)

8. Einrichtung nach Anspruch 7, dadurch gekennzeichnet, daß die Mittelachsen (42, 45) der Düsen (41, 44) wenigstens annähernd parallel zur Mittelachse (9) des Unterschalldiffusors (11) liegen.

9. Einrichtung nach Anspruch 7, dadurch gekennzeichnet, daß die Mittelachsen (47) der Düsen (46) im wesentlichen quer zur Mittelachse (9) des Unterschalldiffusors (11) liegen, und daß die Düsen (46) bevorzugt im stromabseitigen Bereich einer Auskehlung (49) angeordnet sind.

10. Einrichtung nach Anspruch 9, dadurch gekennzeichnet, daß das Blasmedium über eine gekrümmte äußere bzw. untere Begrenzungsfläche (48) in Richtung parallel zur Längsmittelachse (9) des Unterschalldiffusors (11) umgelenkt ist.

11. Einrichtung nach einem der Ansprüche 1 bis 10, mit einer langgestreckten Ausbildung von Blasdüse (16) und Unterschalldiffusor (11; 11a) zur Zerfaserung mindestens einer Reihe in Richtung der Längserstreckung nebeneinander angeordneter Primärfäden, dadurch gekennzeichnet, daß die Stirnseiten des Unterschalldiffusors (11; 11a) und ggfs. der Blasdüse (6) durch Stirnwände (60 bzw. 61) gegenüber der Umgebung abgeschlossen sind.

12. Einrichtung nach Anspruch 11, dadurch gekennzeichnet, daß die Innenseite der Stirnwände (61) des Unterschalldiffusors (11) an den Stellen der plötzlichen Querschnittserweiterung ebenfalls gegenüber der Mittelachse (9) des Unterschalldiffusors (11) entsprechend zurücktreten.

13. Einrichtung nach Anspruch 11 oder 12, dadurch gekennzeichnet, daß an den Stirnwänden der Blasdüse (6) und ggfs. des Diffusors (11) Düsen (62) zum im wesentlichen wandparallelen Einführen von Blasmedium angeordnet sind.

14. Einrichtung nach einem der Ansprüche 1 bis 13, dadurch gekennzeichnet, daß die Seitenwände der Blasdüse (6) und/oder des Unterschalldiffusors (11; 11a) Kühlkanäle (51) für den Durchtritt eines Kühlmittels aufweisen.

**Claims**

1. A device for the production of fibres, in particular mineral fibres, from a fused mass in accordance with the nozzle blasting process,

with a blast nozzle (6), the induction aperture (8) of which can be inserted into at least one primary filament of the fused mass and is frayed out there, under the effect of the airflow directed in a lateral direction onto the primary filament, and

with a subsomic diffuser (11; 11a), connected to the outlet of the blast nozzle (6) to delay gas dispersion of the fibres by solidification of the molten filaments into consolidated fibres,

characterised by the fact that,

the subsonic diffuser (11; 11a) is designed to act as a pulse diffuser with at least one abrupt increase in cross section (recess 16, 17, 18) of the airflow envelope, in such a way that, in the case of conventional pulse diffusers, flow separation occurs in the direction of flow behind the increase in cross section.

2. A device corresponding to Claim 1, characterised by the fact that a single abrupt increase in cross section (recess 16) is provided on the upper duct from the blast nozzle (6) to the subsonic diffuser.

3. A device corresponding to Claim 1 or 2, characterised by the fact that the subsonic diffuser (11; 11a) incorporates several stages arranged in tandem (13, 14, 15) with abrupt changes in cross section,

4. A device corresponding to Claim 3, characterised by the fact that the length of each stage (13, 14, 15) is at least 5 to 6 times the difference of the roots of their outlet and inlet cross sections.

5. A device corresponding to Claims 1 to 4, characterised by the fact hat, preferably, the average expansion angle ([?]) of the subsonic diffuser (11; 11a), between 0.4° and 8°, is between 4° and 7°,

6. A device corresponding to Claims 1 to 5, characterised by the fact that, at the commencement of the abrupt increase in Cross section, a radiused or inclined channel (36) is provided with a cross section which is further enlarged in comparison with the increased cross section (Fig. 5).

7. A device corresponding to Claims 1 to 6, characterised by the fact that, on or below the positions of the abrupt increase in cross section (recesses 16, 17, 18), nozzles (41, 44, 46) are provided to convey the blasting medium. (Figs. 6 to 8).

8. A device corresponding to Claim 7, characterised by the fact that the centrelines (42, 45) of the nozzles (41, 44) are at least virtually parallel to the centreline (9) of the subsonic diffuser (11).

9. A device corresponding to Claim 7, characterised by the fact that the centralines (47) of the nozzles (46) are approximately at right angles to the centreline (9) Of the subsonic diffuser (11) and by the fact that, preferably, the nozzles (46) are located in a recess (49) in the area away fromthe flow.

10. A device corresponding to Claim 9, characterised by the fact that the blasting medium is diverted via a curved external or lower limiting surface (48) in a direction parallel to the longitudinal centreline (9) of the subsonic diffuser (11).

11. A device corresponding to any one of Claims 1 to 10, with a longitudinal arrangement of the blast nozzle (16) and the subsonic diffuser (11; 11a) in order to fray out at least one row in the direction of the longitudinal extent of adjacent primary filaments, characterised by the fact that the ends of the subsonic diffuser (11; 11a) and, if necessary, the blast nozzle (5) are blanked off from the surrounding area by end plates (60 or 61).

12. A device corresponding to Claim 11, characterised by the fact that the inner edges of the end plates (61) of the subsonic diffuser (11), in the positions of the abrupt increase in cross section, are also correspondingly recessed in comparison with the centreline (9) of the subsonic diffuser (11).

13. A device corresponding to Claims 11 or 12, characterised by the fact that, on the end plates of the blast nozzle (6) and, if necessary, the diffuser (11), nozzles (62) are provided for the introduction of blasting medium virtually parallel to the end plates.

14. A device corresponding to any one of Claims 1 to 12, characterised by the fact that the side walls of the blast nozzle (6) and/or of the subsonic diffuser (11; 11a) incorporate cooling ducts (51) for the circulation of a coolant.

## Revendications

1. Dispositif pour la production de fibres, notamment de fibres minérales à partir d'une fonte selon le procédé de soufflage par tuyère,

   avec une tuyère (6) dont la fente de tréfilage (8) peut être alimentée au moins par un fil primaire de la fonte ou celle-ci est effilochée sous l'effet de courant soufflé latéralement par la tuyère en direction du fil primaire,

   ainsi qu'un diffuseur subsonique (11 ; 11a) en aval de la sortie de la tuyère (6) pour ralentir la dispersion de fibres et de gaz pour solidifier les fils fondants en fibres solidifiées,

   caractérisé en ce que

   le diffuseur subsonique (11 ; 11a) est formé comme diffuseur par à-coups avec au moins un élargissement subit de la section transversale (retraits 16, 17, 18) de la bordure du flux, de manière à ce qu'une interruption du flux en direction du flux en aval de l'élargissement de la section transversale soit réalisée de la manière en soi connue.

2. Dispositif selon la revendication 1, caractérisé en ce qu'un seul élargissement subit de la section transversale (retrait 16) est prévu dans la partie supérieure de la tuyère (6) vers le diffuseur subsonique (11).

3. Dispositif selon les revendications 1 ou 2, caractérisé en ce que le diffuseur subsonique (11 ; 11a) présente une pluralité de marches disposées l'une derrière l'autre (13, 14, 15) avec un élargissement subit de la section transversale.

4. Dispositif selon la revendication 3, caractérisé en ce que la longueur de chaque marche (13, 14, 15) est au moins de 5 à 6 fois supérieure à la différence des racines de sa section de sortie et de sa section d'entrée.

5. Dispositif selon l'une des revendications 1 à 4, caractérisé en ce que l'angle d'élargissement moyen ($\alpha$) du diffuseur subsonique (11 ; 11a) se situe entre 0,4° et 8°, de préférence entre 4° et 7°.

6. Dispositif selon l'une des revendications 1 à 5, caractérisé en ce qu'au début de l'élargissement subit de la section transversale, une échancrure arrondie, oblique (36) est prévue, ayant une section transversale agrandie encore par rapport à la section élargie (fig. 5).

7. Dispositif selon l'une des revendications 1 à 6, caractérisée en ce qu'aux endroits de l'élargissement subit de la section transversale ou au-dessous de ceux-ci (retraits 16, 17 , 18) des buses (41, 44, 46) sont prévues pour amener le médium à souffler (fig. 6 à 8).

8. Dispositif selon la revendication 7, caractérisé en ce que les axes médians (42, 45) des buses (41, 44) sont disposés au moins approximativement en parallèle par rapport à l'axe médian (9) du diffuseur subsonique (11).

9. Dispositif selon la revendication 7, caractérisé en ce que les axes médians (47) des (buses) (46) sont disposés substantiellement en transversale par rapport à l'axe médian (9) du diffuseur subsonique (11) et que les buses (46) sont disposées de préférence dans la zone détournée du flux d'une échancrure (49).

10. Dispositif selon la revendication 9, caractérisé en ce que le médium à souffler est dévié par une surface de délimitation (48) extérieure, courbée, au inférieure, en direction parallèle par rapport à l'axe médian longitudinal (9) du diffuseur subsonique (11).

11. Dispositif selon l'une des revendications 1 à 10, comportant une tuyère (6) et un diffuseur subsonique (11 ; 11a) de configuration allongée pour l'effilochage d'au moins une rangée de fils primaires disposés l'un à côté de l'autre en direction longitudinale, caractérisé en ce que les faces du diffuseur subsonique (11, 11a) et le cas échéant, de la tuyère (6) sont fermées par des parois frontales (60 et 61) par rapport à l'environnement.

12. Dispositif selon la revendication 11, caractérisé en ce que le côté intérieur des faces (61) du diffuseur subsonique (11) est en retrait aux endroits de l'élargissement subit de la section transversale, également par rapport à l'axe médian (9) du diffuseur subsonique (11) de retrait correspondant.

13. Dispositif selon les revendications 11 ou 12, caractérisé en ce que sur les faces de la tuyère (6) et le cas échéant du diffuseur (11) , des buses (62) sont disposées pour l'introduction du médium à souffler en direction substantiellement parallèle aux parais.

14. Dispositif selon l'une des revendications 11 à 13, caractérisé en ce que les parois latérales de la tuyère (6) et/ou du diffuseur subsonique (11 ; 11a) présentent des canaux de refroidissement (51) pour le passage d'un fluide de refroidissement.

**Fig. 1**

14

Fig. 2

*Fig. 3*

*Fig. 4*

*Fig. 5*

Fig. 6

Fig. 7

17

Fig. 8

**Fig. 9**

**Fig. 10**